# EUROPEAN PATENT APPLICATION

(11) **EP 4 670 994 A1**
(43) Date of publication of application: **31.12.2025**
(21) Application number: 25184604.4
(22) Date of filing: 23.06.2025
(51) Int. Cl.: B41J 15/04, B41J 3/407, G01G 19/40

(54) **FOOD PRODUCT SCALE AND ASSOCIATED LABEL STOCK CASSETTE ADAPTABLE FOR USE WITH LINER-BASED AND LINERLESS LABEL STOCK**

(30) Priority: 27.06.2024 US 202418756851
(71) Applicant: Illinois Tool Works Inc., Glenview IL 60025 (US)
(72) Inventor: HOLMES, Robert Andrew, Glenview, 60025 (US); TAYLOR, Ian D., Glenview, 60025 (US); REDMAN, Randall L., Glenview, 60025 (US); KNOBLAUCH, Austin, Glenview, 60025 (US); CARTWRIGHT, Kevin, Glenview, 60025 (US); CONNELL, Hugh, Glenview, 60025 (US)
(74) Representative: HGF

(57) **Abstract**

A printer includes a printer body including a cassette station. A label stock cassette includes a label supply hub for holding label stock, wherein the label stock cassette is engageable in a loaded position in the cassette station and is removable from the cassette station for the purpose of label stock replacement. A deflector is selectively moveable between a storage position on the cassette when the label stock cassette is configured used for use with liner-based label stock and a use position on the cassette when the label stock cassette is configured for use with linerless label stock.

## Description

### TECHNICAL FIELD

This application relates generally to scales used for weighing food product in supermarkets, groceries and other stores, and, more particularly, to a scale including a label stock cassette configurable for use with different types of label stock.

### BACKGROUND

In typical commercial food product scale applications the scale is used to weigh food products and determines prices for the food products, and an associated printer prints a label for application to the food product. An operator enters a product number, such as a PLU (price look-up) number, for the product being weighed and the scale accesses its database, or accesses a remote database, for pricing information on the product. The total price for the item is then determined based upon its weight. Price can also be determined based upon item count. In either case, the food product scale typically prints a label with the price and other information for the product.

Both liner-based and linerless label types are available for use in such scales. Similarly, other label printers might have a need for use with both types of label stock. As used herein, the term printer encompasses both devices that function solely or primarily as printers, as well as other devices that include a printer function but also include other functions in addition to printing, such as a weighing scale that also prints labels. Such scales and other printers can include label stock cassettes that are removable for the purpose of replacing or changing the label stock loaded into the cassette. In the past, in order to convert a label stock cassette between a liner-based label stock and a linerless label stock required additional parts, assembly and tools. The conversion would require a service call or the end user to purchase both styles of cassette.

It would be desirable to provide a scale (or other printer) with a label stock cassette that is more readily useable with both liner-based and linerless label stocks.

### SUMMARY

In one aspect, a printer includes a printer body including a cassette station. A label stock cassette includes a label supply hub for holding label stock, wherein the label stock cassette is engageable in a loaded position in the cassette station and is removable from the cassette station for the purpose of label stock replacement. A deflector is selectively moveable between a storage position on the cassette when the label stock cassette is configured used for use with liner-based label stock and a use position on the cassette when the label stock cassette is configured for use with linerless label stock.

In another aspect, a label stock cassette is selectively configurable for use in a printer with either a liner-based label stock or a linerless label stock. The cassette includes a cassette housing and a label supply hub for holding label stock, wherein the cassette housing includes a deflector storage structure and a deflector use structure. A deflector is selectively moveable between a storage position engaged with the deflector storage structure when the label stock cassette is configured used for use with liner-based label stock and a use position engaged with the deflector use structure when the label stock cassette is configured for use with linerless label stock.

The details of one or more embodiments are set forth in the accompanying drawings and the description below. Other features, objects, and advantages will be apparent from the description and drawings, and from the claims.

### BRIEF DESCRIPTION OF THE DRAWINGS

Figs. 1 and 2 show perspective views of a scale;
Fig. 3 shows a perspective view with label cassette removed;
Fig. 4 shows a partial perspective of a printhead region within the cassette receiving station;
Fig. 5 shows a side elevation depicting the path of a liner-based label stock through the cassette;
Fig. 6 shows a side elevation depicting the path of a linerless label stock through the cassette;
Fig. 7 shows a deflector in a collapsed condition for storage;
Figs. 8-11 show the deflector in the storage compartment;
Fig. 12 shows the deflector in an extended condition for use; and
Figs. 13-15 show the deflector, or portions thereof, in the use position.\

### DETAILED DESCRIPTION

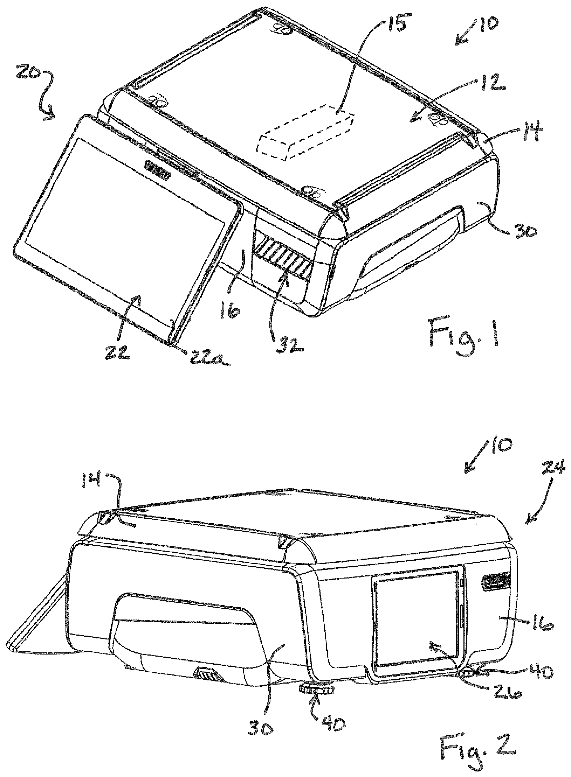

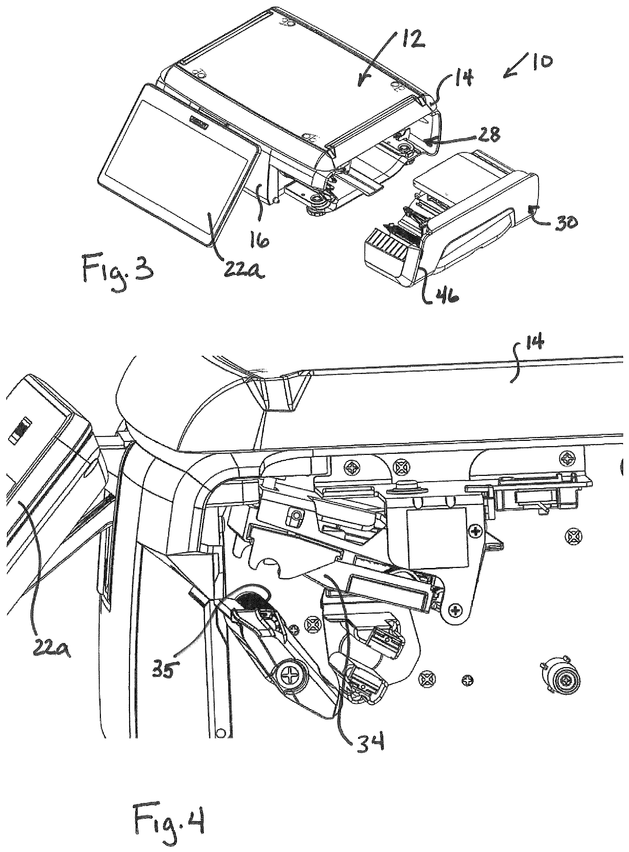

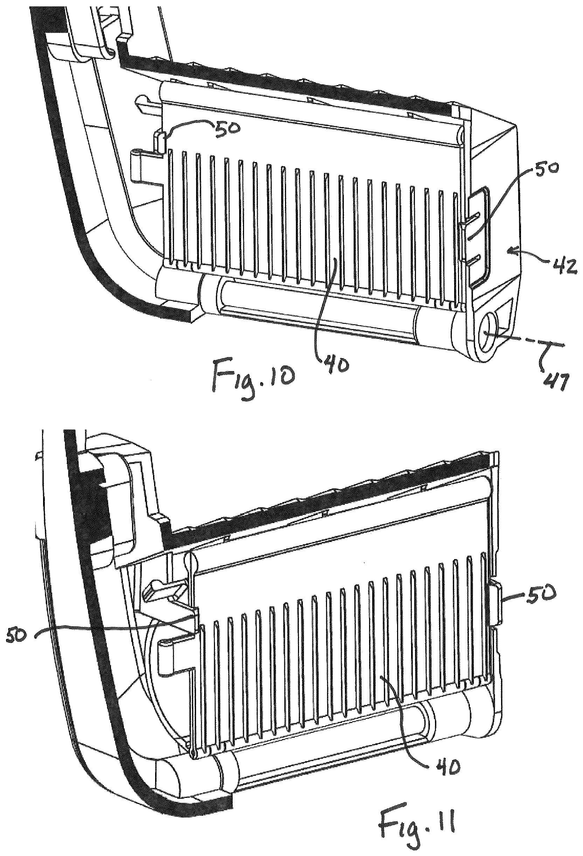

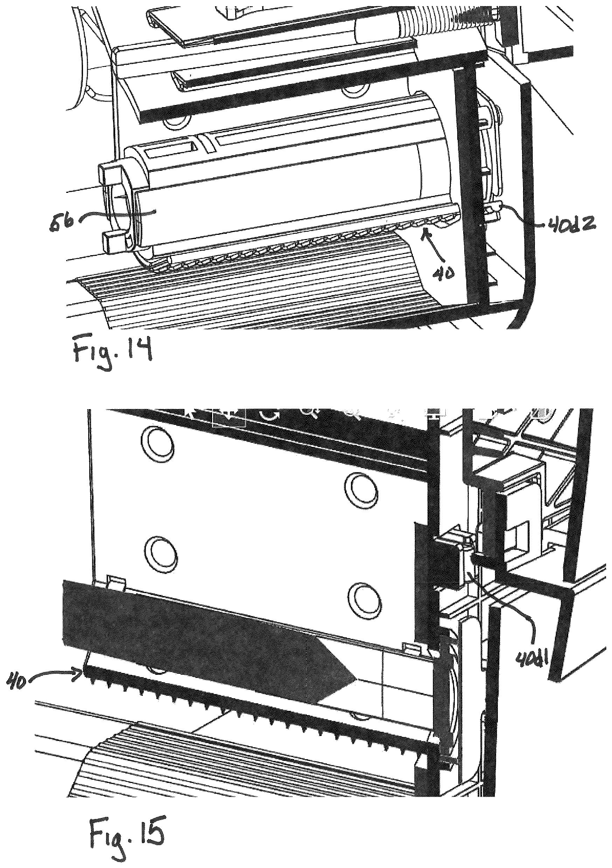

Referring to Figs. 1-15, an exemplary scale configuration is shown. The scale 10 includes a weighing station 12, which in some embodiments may be formed by a weighing platter 14 that can be removed (e.g., for cleaning) from atop the scale body 16. A platter support bracket (not shown) transfers forces to a mechanism, such as a load cell 15 located internal of the scale body 16, for producing weight indicative signals when items are placed on the weighing station. An operator interface side 20 of the scale includes an operator interface 22 configured to display information associated with scale operations. By way of example, the operator interface 22 may be formed by a touch-screen display 22a. A customer interface side 24 of the scale includes a customer interface 26, which in certain embodiments may be formed by any suitable display screen technology.

A side portion of the scale body incudes a cassette station 28 that receives a removable label stock cassette 30 that defines a label exit slot 32. A label printer (e.g., a printhead 34 with associated roller 35) is located within the scale body and may use any suitable printing technology for printing on labels of a label supply roll loaded in the cassette 30, which printed labels then exit the label exit slot 32 to be applied to products. Here, the printhead 34 is shown in a position pivoted upward, and insertion of the cassette into the cassette station causes pivot of the printhead downward toward the roller 35.

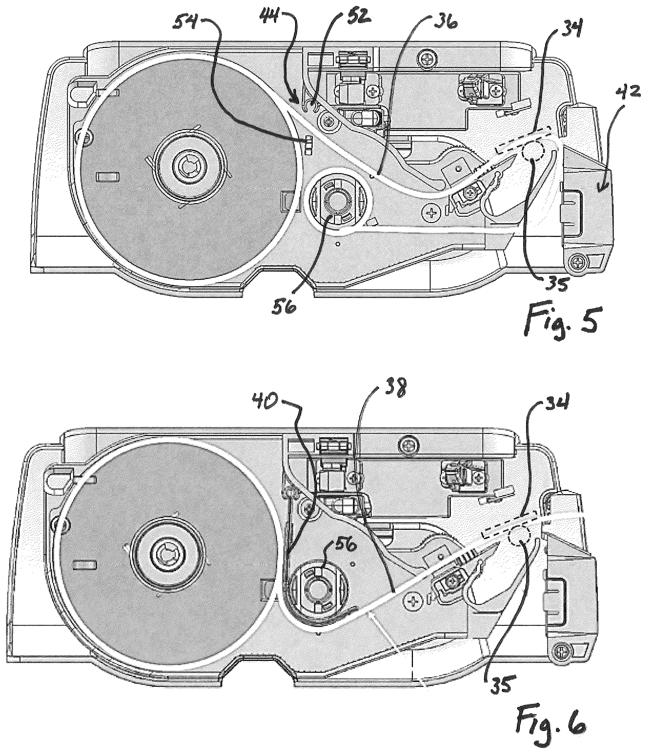

Fig. 5 shows, along an elevation view looking into the cassette and outward from the cassette station, a label stock path 36 for label stock that includes a liner that is taken up on a take-up reel or hub 56. Fig. 6 shows a similar view showing the label stock path 38 with the cassette set up for use with linerless label stock. Notably, the cassette 30 includes features enabling the cassette to be easily adapted/configured for use in both cases.

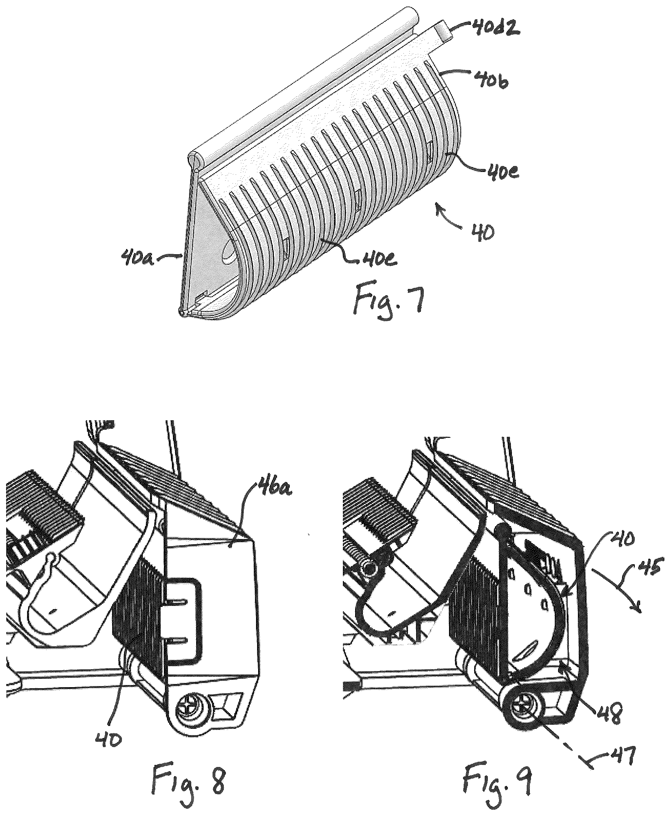

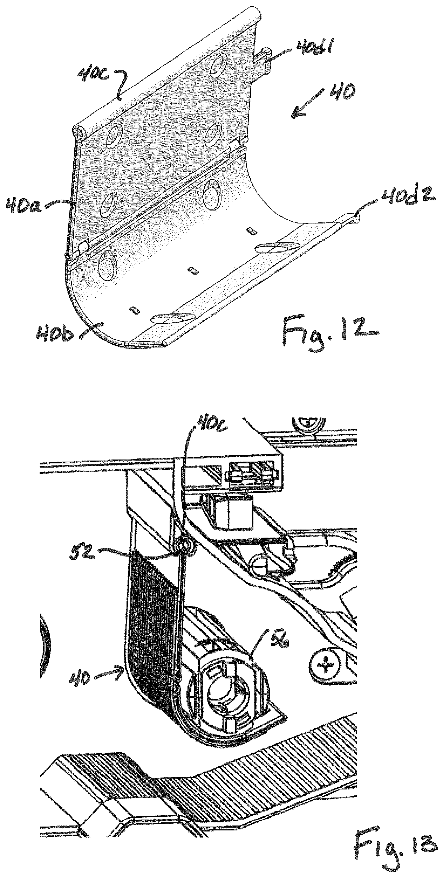

The label stock cassette 30 includes a deflector 40 that is selectively locatable in either a storage position on the cassette or a use position on the cassette. Here, the deflector is comprised of two parts 40a and 40b that are pivotable relative to each to allow the deflector 40 to be in a collapsed condition (Fig. 7) or an extended condition (Fig. 12). The cassette includes a deflector storage structure 42 and a deflector use structure 44. In the storage position, the deflector 40 is engaged with the deflector storage structure 42, when the label stock cassette is configured used for use with liner-based label stock (Fig. 5). In the use position, the deflector 40 engaged with the deflector use structure 44 when the label stock cassette is configured for use with linerless label stock (Fig. 6).

When the deflector is in the storage position, label stock moving along the liner-based label stock path 36 within the label stock cassette does not contact the deflector. When the deflector is in the use position, label stock moving along the linerless label stock path 38 within the cassette moves across and in contact with surface portions (e.g., ribs 40e) of the deflector.

Here, the label stock cassette includes a housing 46, and the deflector storage structure is a housing part 46a that defines a storage compartment 48 in which the deflector is located when in the storage position, wherein the housing part is pivotable (e.g., per arrow 45 about axis 47) between a compartment closed position and a compartment access position. The deflector snap-engages into the storage compartment, when the deflector is in the collapsed condition. For this purpose, the storage compartment 48 includes one or more flexing retention clips 50 for retaining the deflector in the storage position within the storage compartment. Ramp surfaces on the retention clips 50 engage side portions of the collapsed deflector 40 as it is pushed into the compartment 48, causing the retention clips to temporarily flex outward until the clips snap back inward and engage edge surfaces of the deflector 40.

The deflector 40 is placed in the extended condition for the purpose of positioning in the use position. The deflector use structure 44 includes a slide feature 52 and the deflector 40 includes a corresponding slide feature 40c. The slide feature 40c slidingly engages into the slide feature 52 when the deflector is moved into the use position. Here, the slide feature 52 comprises a slot and the slide feature 40c comprises a rail. However, the slide features could be reversed. The slot slide feature 52 is configured to partially surround the rail slide feature 40c to hold the deflector in position. The deflector use structure also includes wall slots 54 and the deflector 40 includes retention clips 40d that engage into the wall slots when the deflector is in the use position, providing an axial retention of the deflector in its use position (relative the axis of the slide feature 52), which axial retention can be overcome by sufficient manual force when needed.

The label stock cassette 30 includes a liner take-up hub 56 for collecting liner when the label stock cassette is configured used for use with liner-based label stock. The hub 56 is configured to be rotated by a drive in the scale. A portion of the deflector 40 wraps partly around the liner take-up hub 56 when the deflector is in the use position.

The described system provide two plastic moulded components 40a, 40b pinned together to create a foldable J-shaped hook deflector. When in the folded or collapsed position, the deflector can be stowed inside of the compartment 48 near the label output slot of the cassette, and the deflector is retained by two small clips on either side which secure it in the stowed position.

Once the deflector 40 is removed from the compartment 48, it can be unfolded into the extended condition forming the J-shaped hook. The deflector can then be placed into the cassette sliding down through the top alignment slot 52 and pushed down until it bottoms out on the cassette body's main wall. The bottom side of the deflector has two integrated snaps 40b1, 40b2, which pass through the cassette wall slots and snap over features moulded into the backside of the wall, securing the deflector 40 in place in the use position. The underside of the deflector contains ribs 40e running in the direction of the label media to provide a low contact surface of the media to run across during operation.

The deflector 40 also modifies the path in which the media is routed through the cassette. When running liner-based media, the liner runs over the top of the take-up hub 56, out through the printer and then back onto the take-up hub once the label is removed. When running the linerless media, the adhesive side of the label is always exposed and will stick to surfaces it comes into contact with easily. The deflector 40 alters the path of the label stock by forcing it to be routed under the take-up hub 56 (instead of over the top), which prevents the linerless media from sticking to the take-up hub.

The system allows for a cassette to be converted on the fly between liner-based media and linerless media, without needing any disassembly or spare parts as the deflector is always stowed within the cassette.

It is to be clearly understood that the above description is intended by way of illustration and example only, is not intended to be taken by way of limitation, and that other changes and modifications are possible. For example, while the above-described embodiment if focused on a printer in the form of a scale, the system could be implemented on printers that do not include scale functionality. Moreover, the exact configuration of the deflector storage structure and the deflector use structure included on the cassette could vary.

Still other variations are possible.
Certain embodiments of the invention are described in the following clauses:
Clause 1. A printer, comprising:
   a printer body including a cassette station;
   a label stock cassette including a label supply hub for holding label stock, wherein the label stock cassette is engageable in a loaded position in the cassette station and is removable from the cassette station for the purpose of label stock replacement;
   a deflector that is selectively moveable between a storage position on the cassette when the label stock cassette is configured used for use with liner-based label stock and a use position on the cassette when the label stock cassette is configured for use with linerless label stock.
Clause 2. The printer of clause 1, wherein, when the deflector is in the storage position, label stock moving along a liner-based label stock path within the label stock cassette does not contact the deflector.
Clause 3. The printer of clause 2, wherein, when the deflector is in the use position, label stock moving along a linerless label stock path within the cassette moves across and in contact with surface portions of the deflector.
Clause 4. The printer of clause 1, wherein the label stock cassette includes a deflector storage structure and a deflector use structure, wherein the deflector is engaged with the deflector storage structure when in the storage position, wherein the deflector is engaged with the deflector use structure when in the use position.
Clause 5. The printer of clause 4, wherein the label stock cassette includes a housing, wherein the deflector storage structure is a housing part that defines a storage compartment in which the deflector is located when in the storage position, wherein the housing part is movable between a compartment closed position and a compartment access position.
Clause 6. The printer of clause 5, wherein the deflector snap-engages into the storage compartment.
Clause 7. The printer of clause 5, wherein the storage compartment includes one or more flexing retention clips for retaining the deflector in the storage position within the storage compartment.
Clause 8. The printer of clause 4, wherein the deflector use structure includes a first slide feature and the deflector includes a second slide feature, wherein the first and second slide features are engaged with each other when the deflector is in the use position.
Clause 9. The printer of clause 8, wherein the first slide feature comprises one of a slot or a rail, wherein the second slide feature comprises the other of the slot or the rail.
Clause 10. The printer of clause 8, wherein the deflector use structure further includes a wall slot and the deflector includes a retention clip that engages into the wall slot when the deflector is in the use position.
Clause 11. The printer of clause 1, wherein the label stock cassette includes a liner take-up hub for collecting liner when the label stock cassette is configured used for use with liner-based label stock, wherein a portion of the deflector wraps at least partly around the liner take-up hub when the deflector is in the use position.
Clause 12. The printer of clause 1, wherein the deflector includes a first part and a second part pivotably connected together for movement between a collapsed condition and an extended condition, wherein the deflector is in the collapsed condition when located in the storage position and the deflector is in the extended condition when located in the use position.
Clause 13. A label stock cassette selectively configurable for use in a printer with either a liner-based label stock or a linerless label stock, the cassette comprising:
   a cassette housing and a label supply hub for holding label stock, wherein the cassette housing includes a deflector storage structure and a deflector use structure;
   a deflector that is selectively moveable between a storage position engaged with the deflector storage structure when the label stock cassette is configured used for use with liner-based label stock and a use position engaged with the deflector use structure when the label stock cassette is configured for use with linerless label stock.
Clause 14. The label stock cassette of clause 13, wherein, when the deflector is in the storage position, label stock moving along a liner-based label stock path within the label stock cassette does not contact the deflector, wherein, when the deflector is in the use position, label stock moving along a linerless label stock path within the cassette moves across and in contact with surface portions of the deflector.
Clause 15. The label stock cassette of clause 13, wherein the deflector storage structure is a housing part that defines a storage compartment in which the deflector is located when in the storage position, wherein the housing part is movable between a compartment closed position and a compartment access position.
Clause 16. The label stock cassette of clause 15, wherein the deflector snap-engages into the storage compartment.
Clause 17. The label stock cassette of clause 13, wherein the deflector use structure includes a first slide feature and the deflector includes a second slide feature, wherein the first and second slide features are engaged with each other when the deflector is in the use position, wherein the first slide feature comprises one of a slot or a rail, wherein the second slide feature comprises the other of the slot or the rail.
Clause 18. The label stock cassette of clause 17, wherein the deflector use structure further includes a wall slot and the deflector includes a retention clip that engages into the wall slot when the deflector is in the use position.
Clause 19. The label stock cassette of clause 13, further comprising a liner take-up hub for collecting liner when the label stock cassette is configured used for use with liner-based label stock, wherein a portion of the deflector wraps at least partly around the liner take-up hub when the deflector is in the use position.
Clause 20. The label stock cassette of clause 13, wherein the deflector includes a first part and a second part pivotably connected together for movement between a collapsed condition and an extended condition, wherein the deflector is in the collapsed condition when located in the storage position and the deflector is in the extended condition when located in the use position.

## Claims

1. A printer, comprising:
a printer body including a cassette station;
a label stock cassette including a label supply hub for holding label stock, wherein the label stock cassette is engageable in a loaded position in the cassette station and is removable from the cassette station for the purpose of label stock replacement;
a deflector that is selectively moveable between a storage position on the cassette when the label stock cassette is configured used for use with liner-based label stock and a use position on the cassette when the label stock cassette is configured for use with linerless label stock.

2. The printer of claim 1, wherein, when the deflector is in the storage position, label stock moving along a liner-based label stock path within the label stock cassette does not contact the deflector and optionally, wherein, when the deflector is in the use position, label stock moving along a linerless label stock path within the cassette moves across and in contact with surface portions of the deflector.

3. The printer of claim 1, wherein the label stock cassette includes a deflector storage structure and a deflector use structure, wherein the deflector is engaged with the deflector storage structure when in the storage position, wherein the deflector is engaged with the deflector use structure when in the use position.

4. The printer of claim 3, wherein the label stock cassette includes a housing, wherein the deflector storage structure is a housing part that defines a storage compartment in which the deflector is located when in the storage position, wherein the housing part is movable between a compartment closed position and a compartment access position.

5. The printer of claim 4, wherein the deflector snap-engages into the storage compartment or wherein the storage compartment includes one or more flexing retention clips for retaining the deflector in the storage position within the storage compartment.

6. The printer of claim 3, wherein the deflector use structure includes a first slide feature and the deflector includes a second slide feature, wherein the first and second slide features are engaged with each other when the deflector is in the use position.

7. The printer of claim 6, wherein the first slide feature comprises one of a slot or a rail, wherein the second slide feature comprises the other of the slot or the rail or wherein the deflector use structure further includes a wall slot and the deflector includes a retention clip that engages into the wall slot when the deflector is in the use position.

8. The printer of claim 1, wherein the label stock cassette includes a liner take-up hub for collecting liner when the label stock cassette is configured used for use with liner-based label stock, wherein a portion of the deflector wraps at least partly around the liner take-up hub when the deflector is in the use position, or wherein the deflector includes a first part and a second part pivotably connected together for movement between a collapsed condition and an extended condition, wherein the deflector is in the collapsed condition when located in the storage position and the deflector is in the extended condition when located in the use position.

9. A label stock cassette selectively configurable for use in a printer with either a liner-based label stock or a linerless label stock, the cassette comprising:
a cassette housing and a label supply hub for holding label stock, wherein the cassette housing includes a deflector storage structure and a deflector use structure;
a deflector that is selectively moveable between a storage position engaged with the deflector storage structure when the label stock cassette is configured used for use with liner-based label stock and a use position engaged with the deflector use structure when the label stock cassette is configured for use with linerless label stock.

10. The label stock cassette of claim 9, wherein, when the deflector is in the storage position, label stock moving along a liner-based label stock path within the label stock cassette does not contact the deflector, wherein, when the deflector is in the use position, label stock moving along a linerless label stock path within the cassette moves across and in contact with surface portions of the deflector.

11. The label stock cassette of claim 9, wherein the deflector storage structure is a housing part that defines a storage compartment in which the deflector is located when in the storage position, wherein the housing part is movable between a compartment closed position and a compartment access position and optionally, wherein the deflector snap-engages into the storage compartment.

12. The label stock cassette of claim 9, wherein the deflector use structure includes a first slide feature and the deflector includes a second slide feature, wherein the first and second slide features are engaged with each other when the deflector is in the use position, wherein the first slide feature comprises one of a slot or a rail, wherein the second slide feature comprises the other of the slot or the rail.

13. The label stock cassette of claim 12, wherein the deflector use structure further includes a wall slot and the deflector includes a retention clip that engages into the wall slot when the deflector is in the use position.

14. The label stock cassette of claim 9, further comprising a liner take-up hub for collecting liner when the label stock cassette is configured used for use with liner-based label stock, wherein a portion of the deflector wraps at least partly around the liner take-up hub when the deflector is in the use position.

15. The label stock cassette of claim 9, wherein the deflector includes a first part and a second part pivotably connected together for movement between a collapsed condition and an extended condition, wherein the deflector is in the collapsed condition when located in the storage position and the deflector is in the extended condition when located in the use position.
